# EUROPÄISCHE PATENTSCHRIFT

(11) **EP 1 146 499 B1**
(45) Veröffentlichungstag und Bekanntmachung des Hinweises auf die Patenterteilung: **29.11.2006**
(21) Anmeldenummer: 01103802.3
(22) Anmeldetag: 16.02.2001
(51) Int. Cl.: G09F 9/35

(54) **Flüssigkristall-Anzeige, insbesondere in einem Kraftfahrzeug**
Liquid crystal display, especially in a motor vehicle
Affichage à cristaux liquides en particulier dans un véhicule automobile

(30) Priorität: 13.04.2000 DE 10018528
(43) Veröffentlichungstag der Anmeldung: 17.10.2001
(73) Patentinhaber: SIEMENS AKTIENGESELLSCHAFT, 80333 München (DE)
(72) Erfinder: Wendt, Anton, 65779 Kelkheim (DE); Wolf, Frank, 64832 Babenhausen (DE)

(56) Entgegenhaltungen:
- DE-A- 4 417 990
- US-A- 5 926 233

## Beschreibung

Die Erfindung betrifft eine Flüssigkristall-Anzeige, insbesondere in einem Kraftfahrzeug, mit einer einen Boden aufweisenden Wanne, gegen die eine Lichtführung mit Reflektoren abgestützt ist, wobei die einzelnen Reflektoren jeweils eine an dem Boden abgestützte Lichtquelle umgeben und bei der die Flüssigkristall-Anzeige eine Display-Aufnahme mit einer darin eingesetzten Flüssigkristallzelle und weiterhin eine außenseitig über den Rand der Flüssigkristallzelle greifende, mit der Wanne verbundene Frontabdeckung hat.

Flüssigkristall-Anzeigen der vorstehenden Art sind u. a. in heutigen Kraftfahrzeugen vorgesehen und sind deshalb allgemein bekannt. Da es sich dabei um Massenprodukte handelt, soll ihre Herstellung möglichst kostengünstig sein. Um zu erreichen, dass das Licht von den Lichtquellen im richtigen Winkel auf die Reflektoren trifft, damit es im rechten Winkel zur Flüssigkristallzelle gelangen kann, muss der Reflektor axial einen genau festgelegten Abstand zu den Lichtquellen haben. Hierzu stützen sich die Lichtführung mit den Reflektoren ebenso wie die Lichtquellen am Boden der Wanne ab. Die Frontabdeckung ist jedoch ebenfalls mit dieser Wanne verbunden, so dass Toleranzen dazu führen, dass zwischen dem über den Rand der Flüssigkristallzelle greifenden Bereich der Frontabdeckung und der Flüssigkristallzelle ein mehr oder weniger großer Spalt entsteht, was durch die transmissive Beleuchtung unschön aussieht.

Zur Behebung dieses Missstandes hat man bisher in die Display-Aufnahme elastische Stege eingesetzt, auf welche sich die Flüssigkristallzelle abstützt, so dass sie von der Display-Aufnahme weg gegen die Frontabdeckung vorgespannt wird. Eine solche Ausführung ist aus dem Dokument US-A-5 926 233 bekannt und erfordert jedoch beträchtlichen Montageaufwand und führt bei der Massenfertigung zu unerwünscht hohen Kosten. Man könnte alternativ daran denken, die gesamte Lichtführung mit der Display-Aufnahme durch Federn zwischen dem Boden der die Lichtführung aufnehmenden Wanne und der Lichtführung zur Flüssigkristallzelle hin vorzuspannen. Eine solche Ausführung wäre jedoch ebenfalls relativ teuer und hätte den Nachteil, dass sich die axiale Lage der Reflektoren relativ zu den Lichtquellen toleranzbedingt ändern würde, so dass nicht sichergestellt ist, dass das Licht im rechten Winkel zur Flüssigkristallzelle gelangt.

Der Erfindung liegt das Problem zugrunde, eine Flüssigkristall-Anzeige der eingangs genannten Art so auszubilden, dass sie möglichst kostengünstig herstellbar ist, ein optimale Beleuchtung aufweist und Spalte zwischen der Flüssigkristallzelle und der Frontabdeckung ausgeschlossen sind.

Dieses Problem wird erfindungsgemäß dadurch gelöst, dass die Display-Aufnahme durch Federn von der Lichtführung weg zu der Flüssigkristallzelle hin vorgespannt ist. Durch diese erfindungsgemäße Trennung der Lichtführung und der Display-Aufnahme kann man auf sehr einfache Weise sicherstellen, dass einerseits die Lichtführung mit ihren Reflektoren stets gleichen axialen Abstand zu den Lichtquellen hat, andererseits die Flüssigkristallzelle gegen die Frontabdeckung vorgespannt wird, so dass dort kein aufgrund unterschiedlicher Toleranzen unterschiedlich großer Spalt entsteht. Weiterhin wird auf einfache Weise ein Klappern von Bauteilen bei Erschütterungen, wie sie beispielsweise im Kraftfahrzeug unvermeidlich sind, ausgeschlossen.

Die Lichtquellen können beliebiger Art, z. B. Glühbirnen, sein. Bevorzugt handelt es sich jedoch, insbesondere in Kraftfahrzeugen, wegen der geringen Abwärme und des niedrigen Energiebedarfs in Verbindung mit hoher Lebensdauer um Leuchtdioden.

Besonders kostengünstig ist die Flüssigkristall-Anzeige herstellbar, wenn gemäß einer vorteilhaften Weiterbildung der Erfindung die Display-Aufnahme und die Lichtführung ein einstückig im Spritzgießverfahren herstellbares Kunststoff teil bilden und die Federn durch elastische Bereiche der Lichtführung gebildet sind, welche über Querstege mit der Display-Aufnahme Verbindung haben.

Die Display-Aufnahme wird zuverlässig parallel zu der Haupterstreckungsrichtung der Lichtführung und der Frontabdeckung gehalten, wenn über die Kontur der Display-Aufnahme gleichmäßig verteilt insgesamt vier Querstege vorgesehen sind.

Die Lichtführung bildet mit der Display-Aufnahme ein teleskopartig ineinander schiebbares Bauteil, so dass der gewünschte Federweg erreichbar ist, ohne dass eine große Bauhöhe entsteht, wenn die Lichtführung in die Innenkontur der Display-Aufnahme passend bemessen ist und die Querstege zum Überbrücken des nach außen gerichteten Abstandes zwischen der Lichtführung und der Display-Aufnahme ausgebildet sind.

Wenn bei einer Flüssigkristall-Anzeige unterschiedliche Bereiche verschiedenfarbig oder vorübergehend nur einzelne Bereiche beleuchtet werden sollen, dann tritt das Problem des Lichtübertrittes in den nicht oder andersfarbig beleuchteten Bereich auf, wenn die die Bereiche voneinander abschottende Trennwand nicht fest gegen die Flüssigkristallzelle anliegt. Das lässt sich gemäß einer anderen Weiterbildung der Erfindung leicht dadurch verhindern, dass in der Lichtführung zumindest eine gegen die Flüssigkristallzelle anliegende Trennwand vorgesehen ist und dass diese Trennwand durch Federzungen mit der Lichtführung verbunden und zur Flüssigkristallzelle hin vorgespannt ist. Auch eine solche Trennwand kann einstückig mit der Lichtführung und damit auch der Display-Aufnahme ausgebildet sein und in einem einzigen Werkzeug durch Spritzgießen hergestellt werden.

Die Trennwand ist ausreichend stabil in der Lichtführung gehalten und weist genügend Vorspannung auf, wenn die Trennwand im unteren Bereich durch jeweils eine quer zu ihrer Haupterstreckungsrichtung, im mittleren Bereich der Trennwand verlaufende Federzunge mit der Lichtführung verbunden ist.

Die Trennwand wird in ihrer Lage trotz ihres möglichen Federweges präzise gehalten, wenn die Trennwand im unteren Bereich an jeder Seite mit einer mit geringem Abstand parallel zu ihr verlaufenden Wand verbunden ist und wenn die jeweilige Federzunge an jeder Seite der Trennwand sich zwischen der Wand und der Lichtführung erstreckt.

Die Display-Aufnahme hat eine hohe Verwindungssteifigkeit, wenn sie eine zur Lichtführung hin gerichtete und diese teilweise übergreifende, umlaufende, flanschartige Wand hat.

Die Display-Aufnahme wird zuverlässig auch schon vor der Anlage der Flüssigkristallzelle an der Frontabdeckung parallel zur Ebene der Frontabdeckung gehalten, wenn die die Lichtführung mit der Display-Aufnahme verbindenden Querstege gabelförmig ausgebildet sind und mit zwei Schenkeln mit der Display-Aufnahme sowie mit einem mittleren Verbindungsstück mit der Lichtführung Verbindung haben.

Die Lage der Display-Aufnahme relativ zur Frontabdeckung und zugleich die Lage der Lichtführung relativ zu den Lichtquellen wird bei der Montage zwangsläufig exakt festgelegt, wenn die Display-Aufnahme mehrere, nach unten gerichtete, in den Boden der Wanne eingreifende Zentrierzapfen aufweist.

Die Erfindung lässt zahlreiche Ausführungsformen zu. Zwei davon sind in der Zeichnung dargestellt und werden nachfolgend beschrieben. Die Zeichnung zeigt in
- Fig. 1: einen Querschnitt durch eine Flüssigkristall-Anzeige nach der Erfindung,
- Fig. 2: eine perspektivische Vorderansicht einer Lichtführung mit einer Display-Aufnahme und
- Fig. 3: eine perspektivische Ansicht von hinten einer zweiten Ausführungsform einer Lichtführung mit einer Display-Aufnahme.

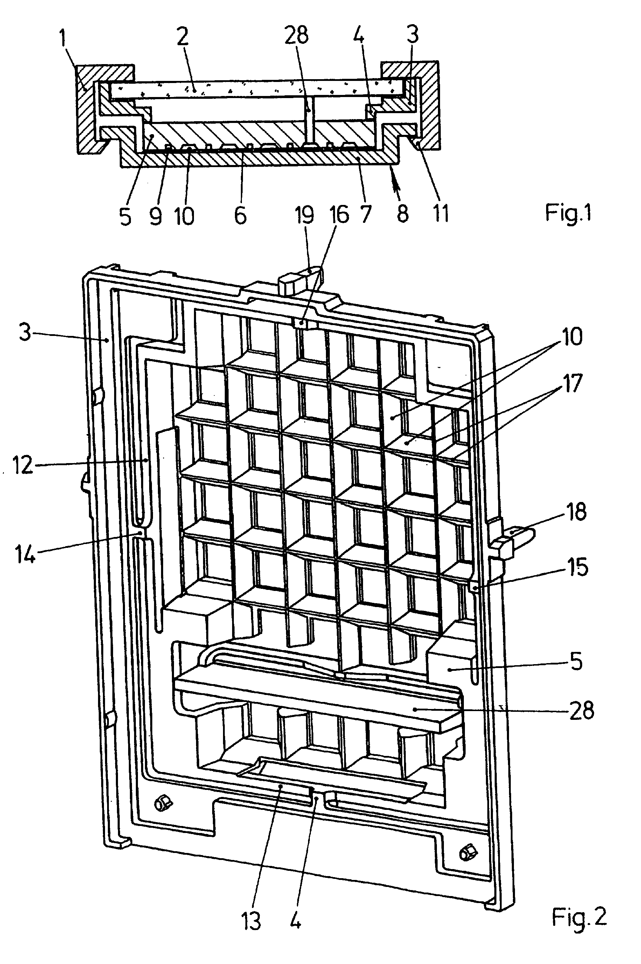

Die Figur 1 zeigt eine Frontabdeckung 1, welche über den Rand einer Flüssigkristallzelle 2, die in ein Kombinationsinstrument, eine Instrumententafel oder eine Mittelkonsole (hier nicht dargestellt) eines Kraftfahrzeugs eingebaut ist, greift. Diese Flüssigkristallzelle 2 liegt in einer Display-Aufnahme 3, welche über Querstege 4 mit einer Lichtführung 5 verbunden ist. Die Lichtführung 5 steht auf einer flexiblen Leiterfolie 6, die auf einem Boden 7 einer Wanne 8 aufliegt und mit Leuchtdioden 9 bestückt ist, welche von Reflektoren 10 der Lichtführung 5 umgeben sind. Die Wanne 8 ist mittels Rasten 11 mit der Frontabdeckung 1 verbunden. Zu erkennen ist in Figur 1 weiterhin eine Trennwand 28, welche von der Lichtführung 5 hochführt und gegen die Flüssigkristallzelle 2 anliegt.

Die Display-Aufnahme 3 ist aufgrund der Querstege 4 einstückig mit der Lichtführung 5 ausgebildet, wird jedoch durch Materialbereiche der Lichtführung 5 zur Flüssigkristallzelle 2 hin vorgespannt. Dadurch stützt sich zugleich die Lichtführung 5 mit Vorspannung auf der Leiterfolie 6 und somit auch auf dem Boden 7 der Wanne 8 ab.

Die Figur 2 dient der weiteren Verdeutlichung der Gestaltung der Lichtführung 5 und der Display-Aufnahme 3. Zu erkennen sind an der Lichtführung 5 jeweils durch frei verlaufende Stege gebildete Federn 12, 13, von denen aus die Querstege 4, 14, 15, 16 zu der Display-Aufnahme 3 führen. Weiterhin erkennt man, dass die Lichtführung 5 ein einzelne Rechtecke bildendes Gitter 17 hat, welches in jedem Rechteck jeweils vier der Reflektoren 10 hat. Zur Zentrierung der Lichtführung 5 und der Display-Aufnahme 3 dienen Zentrierzapfen 18, 19, welche in nicht gezeigte Ausnehmungen des Bodens 7 der Wanne 8 zu greifen vermögen. Die in Figur 1 gezeigte Trennwand 28 ist in Figur 2 ebenfalls zu erkennen.

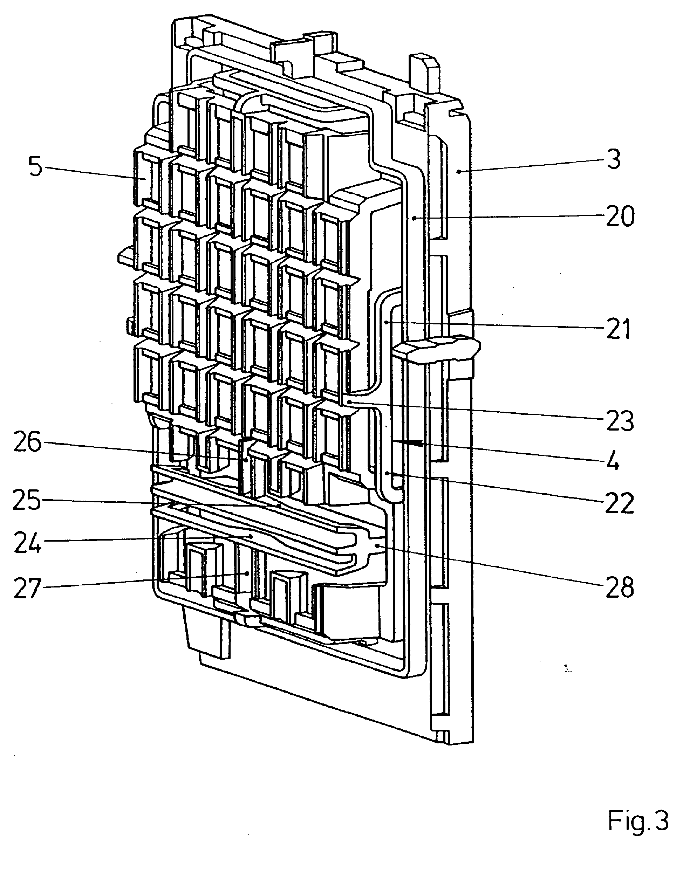

Die Figur 3 zeigt, dass die Display-Aufnahme 3 an ihrer Unterseite zur Erhöhung ihrer Verwindungssteifigkeit eine flanschartige umlaufende Wand 20 aufweisen kann, die so bemessen ist, dass die Lichtführung 5 teleskopartig in den Bereich dieser Wand 20 eintauchen kann. Die Verbindung zwischen der Lichtführung 5 und der Display-Aufnahme 3 erfolgt bei dieser Ausführungsform durch gabelförmige Querstege 4. Diese sind mit den Enden zweier parallel zu der Wand 20 verlaufenden Schenkeln 21, 22 mit der Wand 20 und damit mit der Display-Aufnahme 3 verbunden. Diese Schenkel 21, 22 erstrecken sich von einem mittigen Verbindungsstück 23 weg, welches die Verbindung zu der Lichtführung 5 bildet.

Die Figur 3 zeigt weiterhin, dass im unteren Bereich der Trennwand 28 diese mit zwei parallel zu ihr mit geringem Abstand verlaufenden Wänden 24, 25 verbunden ist. Von diesen Wänden 24, 25 führt jeweils im mittleren Bereich eine Federzunge 26, 27 zum übrigen Bereich der Lichtführung 5. Diese Federzungen 26, 27 sind so ausgebildet, dass die Trennwand 28 mit Vorspannung gegen die in Figur 1 gezeigte Flüssigkristallzelle anliegt.

## Patentansprüche

1. Flüssigkristall-Anzeige, insbesondere in einem Kraftfahrzeug, mit einer einen Boden aufweisenden Wanne, gegen die eine Lichtführung mit Reflektoren abgestützt ist, wobei die einzelnen Reflektoren jeweils eine an dem Boden abgestützte Lichtquelle umgeben und bei der die Flüssigkristall-Anzeige eine Display-Aufnahme mit einer darin eingesetzten Flüssigkristallzelle und weiterhin eine außenseitig über den Rand der Flüssigkristallzelle greifende, mit der Wanne verbundene Frontabdeckung hat, **dadurch gekennzeichnet, dass** die Display-Aufnahme (3) durch Federn (12, 13) von der Lichtführung (5) weg zu der Flüssigkristallzelle (2) hin vorgespannt ist.

2. Flüssigkristall-Anzeige nach Anspruch 1, **dadurch gekennzeichnet, dass** die Display-Aufnahme (3) und die Lichtführung (5) ein einstückig im Spritzgießverfahren herstellbares Kunststoffteil bilden und die Federn (12, 13) durch elastische Bereiche der Lichtführung (5) gebildet sind, welche über Querstege (4, 14, 15, 16) mit der Display-Aufnahme (3) Verbindung haben.

3. Flüssigkristall-Anzeige nach Anspruch 2, **dadurch gekennzeichnet, dass** über die Kontur der Display-Aufnahme (3) gleichmäßig verteilt insgesamt vier Querstege (4, 14, 15, 16) vorgesehen sind.

4. Flüssigkristall-Anzeige nach einem der vorangehenden Ansprüche, **dadurch gekennzeichnet, dass** die Lichtführung (5) in die Innenkontur der Display-Aufnahme (3) passend bemessen ist und die Querstege (4, 14, 15, 16) zum Überbrücken des nach außen gerichteten Abstandes zwischen der Lichtführung (5) und der Display-Aufnahme (3) ausgebildet sind.

5. Flüssigkristall-Anzeige nach einem der vorangehenden Ansprüche, **dadurch gekennzeichnet, dass** in der Lichtführung (5) zumindest eine gegen die Flüssigkristallzelle (2) anliegende Trennwand (28) vorgesehen ist und dass diese Trennwand (28) durch Federzungen (26, 27) mit der Lichtführung (5) verbunden und zur Flüssigkristallzelle (2) hin vorgespannt ist.

6. Flüssigkristall-Anzeige nach Anspruch 5, **dadurch gekennzeichnet, dass** die Trennwand (28) im unteren Bereich durch jeweils eine quer zu ihrer Haupterstreckungsrichtung, im mittleren Bereich der Trennwand (28) verlaufende Federzungen (26, 27) mit der Lichtführung verbunden ist.

7. Flüssigkristall-Anzeige nach Anspruch 6, **dadurch gekennzeichnet, dass** die Trennwand (28) im unteren Bereich an jeder Seite mit einer mit geringem Abstand parallel zu ihr verlaufenden Wand (24, 25) verbunden ist und dass die jeweilige Federzunge (26, 27) an jeder Seite der Trennwand (28) sich zwischen der Wand (24, 25) und der Lichtführung (5) erstreckt.

8. Flüssigkristall-Anzeige nach einem der vorangehenden Ansprüche, **dadurch gekennzeichnet, dass** die Display-Aufnahme (3) eine zur Lichtführung (5) hin gerichtete und diese teilweise übergreifende, umlaufende, flanschartige Wand (20) hat.

9. Flüssigkristall-Anzeige nach einem der vorangehenden Ansprüche, **dadurch gekennzeichnet, dass** die die Lichtführung (5) mit der Display-Aufnahme (3) verbindenden Querstege (4) gabelförmig ausgebildet sind und mit zwei Schenkeln (21, 22) mit der Display-Aufnahme (3) sowie mit einem mittleren Verbindungsstück (23) mit der Lichtführung (5) Verbindung haben.

10. Flüssigkristall-Anzeige nach einem der vorangehenden Ansprüche, **dadurch gekennzeichnet, dass** die Display-Aufnahme (3) mehrere nach unten gerichtete, in den Boden (7) der Wanne (8) eingreifende Zentrierzapfen (18, 19) aufweist.

## Claims

1. Liquid crystal display, especially in a motor vehicle, having a trough which has a bottom and against which a light guide with reflectors is supported, the individual reflectors in each case surrounding a light source supported at the bottom, and in which the liquid crystal display has a display receptacle with a liquid crystal cell inserted therein and furthermore has a front cover which engages over the edge of the liquid crystal cell on the exterior side and is connected to the trough, **characterized in that** the display receptacle (3) is prestressed away from the light guide (5) towards the liquid crystal cell (2) by springs (12, 13).

2. Liquid crystal display according to Claim 1, **characterized in that** the display receptacle (3) and the light guide (5) form a plastic part which can be integrally produced by the injection-moulding method, and the springs (12, 13) are formed by elastic regions of the light guide (5) which are connected to the display receptacle (3) via transverse webs (4, 14, 15, 16).

3. Liquid crystal display according to Claim 2, **characterized in that** a total of four transverse webs (4, 14, 15, 16) are provided in a manner distributed uniformly over the contour of the display receptacle (3).

4. Liquid crystal display according to one of the preceding claims, **characterized in that** the light guide (5) is dimensioned in a manner fitting into the inner contour of the display receptacle (3) and the transverse webs (4, 14, 15, 16) are formed for bridging the outwardly directed distance between the light guide (5) and the display receptacle (3).

5. Liquid crystal display according to one of the preceding claims, **characterized in that** at least one partition wall (28) bearing against the liquid crystal cell (2) is provided in the light guide (5), and **in that** said partition wall (28) is connected to the light guide (5) and prestressed towards the liquid crystal cell (2) by spring tongues (26, 27).

6. Liquid crystal display according to Claim 5, **characterized in that** the partition wall (28) is connected to the light guide in the lower region by a respective spring tongue (26, 27) running transversely with respect to its main extension direction in the central region of the partition wall (28).

7. Liquid crystal display according to Claim 6, **characterized in that** the partition wall (28) is connected in the lower region at each side to a wall (24, 25) running parallel to it at a small distance, and **in that** the respective spring tongue (26, 27), at each side of the partition wall (28), extends between the wall (24, 25) and the light guide (5).

8. Liquid crystal display according to one of the preceding claims, **characterized in that** the display receptacle (3) has a peripheral flange-like wall (20) that is directed towards the light guide (5) and partly engages over the latter.

9. Liquid crystal display according to one of the preceding claims, **characterized in that** the transverse webs (4) connecting the light guide (5) to the display receptacle (3) are formed in forked fashion and are connected to the display receptacle (3) by two limbs (21, 22) and also to the light guide (5) by a central connecting piece (23).

10. Liquid crystal display according to one of the preceding claims, **characterized in that** the display receptacle (3) has a plurality of downwardly directed centring pins (18, 19) engaging into the bottom (7) of the trough (8).

## Revendications

1. Affichage à cristaux liquides, notamment dans un véhicule automobile, comportant un carter ayant un fond, où un système de conduction de la lumière avec des réflecteurs s'appuie contre le dit carter, les différents réflecteurs entourant dans chaque cas une source lumineuse supportée par le fond et où l'affichage à cristaux liquides a un réceptacle pour un écran avec une cellule à cristaux liquides qui y est insérée et, en outre, un couvercle avant qui est lié au carter et qui s'emboîte à l'extérieur sur le bord de la cellule à cristaux liquides, **caractérisé par le fait que** le réceptacle pour écran (3) est soumis par des ressorts (12, 13) à une force de précontrainte qui l'écarte du système de conduction de la lumière (5) vers la cellule à cristaux liquides (2).

2. Affichage à cristaux liquides selon la revendication 1, **caractérisé par le fait que** le réceptacle pour écran (3) et le système de conduction de la lumière (5) forment une pièce unique en matière plastique fabriquée avec un procédé de moulage par injection et que les ressorts (12, 13) sont formés par des parties élastiques du système de conduction de la lumière (5), qui sont liés au réceptacle pour écran (3) par l'intermédiaire d'entretoises transversales (4, 14, 15, 16).

3. Affichage à cristaux liquides selon la revendication 2, **caractérisé par le fait qu'**il est prévu au total quatre entretoises transversales (4, 14, 15, 16) réparties d'une façon régulière sur le pourtour du réceptacle pour écran (3).

4. Affichage à cristaux liquides selon l'une des revendications précédentes, **caractérisé par le fait que** le système de conduction de la lumière (5) a des dimensions adaptées au contour intérieur du réceptacle pour écran (3) et que les entretoises transversales (4, 14, 15, 16) sont conçues pour surmonter l'écartement dirigé vers l'extérieur existant entre le système de conduction de la lumière (5) et le réceptacle pour écran (3).

5. Affichage à cristaux liquides selon l'une des revendications précédentes, **caractérisé par le fait qu'**il est prévu, dans le système de conduction de la lumière (5), au moins une cloison (28) appliquée contre la cellule à cristaux liquides (2) et que cette cloison (28) est liée au système de conduction de la lumière (5) par des languettes à ressort (26, 27) et est soumise à une force de précontrainte dirigée vers la cellule à cristaux liquides (2).

6. Affichage à cristaux liquides selon la revendication 5, **caractérisé par le fait que** la cloison (28) est liée au système de conduction de la lumière, dans la partie inférieure, de chaque côté par une languette à ressort (26, 27) placée perpendiculairement à la direction de la dimension principale de la dite cloison et se trouvant dans la partie centrale de la cloison (28).

7. Affichage à cristaux liquides selon la revendication 6, **caractérisé par le fait que** la cloison (28) est liée, dans la partie inférieure, de chaque côté à une paroi (24, 25) qui lui est parallèle avec un faible écartement et que la languette à ressort respective (26, 27) se trouve de chaque côté de la cloison (28) entre la paroi (24, 25) et le système de conduction de la lumière (5).

8. Affichage à cristaux liquides selon l'une des revendications précédentes, **caractérisé par le fait que** le réceptacle pour écran (3) a une paroi (20), périphérique et à la manière d'une bride, dirigée vers le système à conduction de la lumière (5) et s'emboîtant partiellement sur ce dernier.

9. Affichage à cristaux liquides selon l'une des revendications précédentes, **caractérisé par le fait que** les entretoises transversales (4) liant le système de conduction de la lumière (5) au réceptacle pour écran (3) sont en forme de fourche et sont, par deux branches (21, 22), liées au réceptacle pour écran (3), ainsi que par une pièce centrale de liaison (23) au système de conduction de la lumière (5).

10. Affichage à cristaux liquides selon l'une des revendications précédentes, **caractérisé par le fait que** le réceptacle pour écran (3) comporte plusieurs pivots de centrage (18, 19) dirigés vers le bas et s'engageant dans le fond (7) du carter (8).
